# EUROPÄISCHE PATENTSCHRIFT

(11) **EP 2 232 105 B1**
(45) Veröffentlichungstag und Bekanntmachung des Hinweises auf die Patenterteilung: **06.05.2015**
(21) Anmeldenummer: 08863039.7
(22) Anmeldetag: 15.12.2008
(51) Int. Cl.: F16H 57/04, B05D 3/14, B05D 5/08

(54) **VERFAHREN ZUR HERSTELLUNG EINER POLYMERBESCHICHTUNG**
METHOD FOR PRODUCING A POLYMER COATING
PROCÉDÉ DE FABRICATION D'UN REVÊTEMENT POLYMÈRE

(30) Priorität: 14.12.2007 AT 20412007
(43) Veröffentlichungstag der Anmeldung: 29.09.2010
(73) Patentinhaber: HIGH TECH COATINGS GMBH, 4663 Laakirchen (AT)
(72) Erfinder: EITZINGER, Günter, A-4850 Timelkam (AT)
(74) Vertreter: Ofner, Clemens
(86) Internationale Anmeldenummer: PCT/AT2008/000451
(87) Internationale Veröffentlichungsnummer: WO 2009/076689

(56) Entgegenhaltungen:
- EP-A- 1 705 405
- WO-A-01/85360
- WO-A-02/48575
- WO-A-2006/046003
- US-A- 4 981 713

## Beschreibung

Die Erfindung betrifft ein Verfahren zur Herstellung einer abreibbaren Beschichtung auf einer Oberfläche von Zähnen eines Verzahnungselementes für die Einstellung eines Zahnflankenspiels zwischen Zähnen von zwei kämmenden, metallischen Verzahnungselementen, nach dem auf zumindest einem Teil einer Oberfläche der Zähne zumindest eines Verzahnungselementes die abreibbare Polymerbeschichtung aufgebracht wird, ein metallisches Verzahnungselement mit einem Grundkörper, der entlang seines Umfangs Zähne aufweist, die zumindest teilweise an einer Oberfläche eine abreibbare Polymertieschichtung aufweisen, sowie einen Antrieb mit zumindest zwei kämmenden Verzahnungselementen.

Die Einstellung eines bestimmten Zahnflankenspiels zwischen Zahnrädern, bspw. eines Antriebs, dient bekanntlich der Ausbildung eines Schmierfilmes, des Ausgleichs von Maßänderungen durch Temperatureinflüsse, des Ausgleichs einer Zahndeformation durch die Beanspruchung sowie für den Ausgleich von Fertigungs- und Montagefehlern, wie dies in der DE 199 55 474 C1 beschrieben ist. Daneben muss aber auch ein bestimmtes Zahnflankenspiel eingehalten werden, um die Geräuschentwicklung derartiger Antriebe zu minimieren.

Neben der Einstellung des Zahnflankenspiels über rein mechanische Methoden, wie bspw. der Anwendung von Lehren, wurden auch die Anordnung einer Zwischenlage bzw. von abreibbaren Beschichtungen hierfür beschrieben.

So beschreibt die DE 199 55 474 C ein Verfahren zur Einstellung eines Zahnflankenspiels in einem Zahnrad-Getriebe, insbesondere für Ausgleichswellen von Brennkraftmaschinen, wobei mindestens einem um eine gehäusefeste Achse drehbaren ersten Zahnrad bei der Montage mit Einstellung eines Zahnflankenspiels ein zweites Zahnrad achsparallel verschiebbar zugeführt wird und zur Einstellung des Zahnflankenspiels eine zwischen den Zahnflanken ineinander greifender Zähne der kämmenden Zahnräder entfernbar angeordnet Zwischenlage verwendet wird. Diese Zwischenlage ist als zumindest bei einem der Zahnräder vor dessen Montage auf die Zahnflanken bestimmter Zähne abdeckende, fixierte Auflage ausgebildet und wird das Zahnrad mit fixierter, angeordneter Auflage bzw. Zwischenlage bei der Montage mit einer vorbestimmten Kraft mit korrespondierenden Zahnflanken des anderen Zahnrades in spielfreien Eingriff gebracht, wobei die Zwischenlage nach Zahnspieleinstellung der Zahnräder durch laufbedingten Abrieb der Auflage oder durch eine gezielte mechanische Aufnahme entfernt wird. Die Auflage kann dabei aus einem Festschmierstoff gebildet sein, bzw. galvanisch abgeschieden werden. Ebenso werden Zwischenlagen beschrieben, die als Formteil aus einer Kunststoff- oder einer Elastomer- oder einer Metallfolie oder aus einem Drahtgewebe gebildet sind.

Die WO 02/48575 A, welche den nächsten Stand der Technik beschreibt und die Präambel der Ansprüche 1 und 11 offenbart, beschreibt ein Verfahren zur Erzielung eines gewünschten Zahnflankenspiels bei einem Getriebe mit wenigstens zwei kämmenden Zahnrädern, die zur Spieleinstellung relativ zueinander mittels einer entfernbaren Beschichtung auf wenigstens einem der Zahnräder eingestellt werden. Die Beschichtung umfasst ein Gemisch, das ein Polymermaterial und einen Festschmierstoff enthält.

Weiters beschreibt die DE 10 2005 013 867 A ein Verfahren zur Einstellung eines Verdrehflankenspiels miteinander kämmender Verzahnungspartner mittels einer lösbaren Beschichtung, die im Zahnzwischenraum der zur Spieleinstellung gegeneinander zustellbaren Verzahnungspartner in einer dem vorgesehenen Verdrehflankenspiel weitgehend entsprechenden Schichtdicke aufgebracht wird, wobei die Beschichtung aus einem Gemisch aus 5 Gew.-% bis 20 Gew.-% Polymermaterial, 5 Gew.-% bis 20 Gew.-% Festschmierstoff und bis zu etwa 75 Gew.-% Lösemittel besteht.

Wie die Praxis gezeigt hat, konnten bislang diese Beschichtungen nur unter zu Hilfenahme von Haftvermittlerschichten mit ausreichender Haftfestigkeit angebracht werden. Sowohl in der WO 02/48 575 A als auch in der DE 10 2005 013 867 A werden in den Ausführungsbeispielen immer phosphatierte Zahnräder beschichtet. Durch diese Phosphatierung wird eine höhere Oberflächenrauhigkeit der zu beschichtenden Oberfläche erreicht, wodurch sich ein besserer Verbund zwischen der Zahnoberfläche und der Beschichtung für die Einstellung des Zahnflankenspiels erzielen lässt.

Aufgabe vorliegender Erfindung ist es, eine Möglichkeit anzugeben, ein Verfahren zur Einstellung eines Zahnflankenspiels kostengünstiger auszugestalten.

Gelöst wird diese Aufgabe der Erfindung durch das eingangs genannte Verfahren zur Herstellung einer abreibbaren Beschichtung, nach dem die zu beschichtende Oberfläche vor dem Aufbringen der Beschichtung in einem Plasma behandelt wird und danach die Beschichtung direkt - als ohne die Anordnung von Haftvermittlerschichten wie bspw. Phosphatierungsschichten - auf diese Oberfläche aufgebracht wird, unabhängig hiervon durch ein metallisches Verzahnungselement bei dem die Polymerbeschichtung direkt auf der metallischen Oberfläche aufgetragen ist sowie durch einen entsprechenden Antrieb der zumindest ein erfindungsgemäß ausgebildetes Verzahnungselement aufweist.

Während herkömmliche Beschichtungsverfahren zu diesem Zweck eine alkalische Entfettung der Oberfläche, daran anschließend eine Dekapierung, die Aufbringung einer Manganphosphatschicht, deren Trocknung sowie ein anschließendes Abbürsten erfordern kann mit dem erfindungsgemäßen Verfahren diese Abfolge an einzelnen Verfahrensschritten deutlich reduziert werden, in dem ausschließlich die Plasmaaktivierung der Oberfläche durchgeführt wird. Es können damit die Zykluszeiten für die Beschichtung derartiger Verzahnungselemente und somit auch die Kosten für deren Herstellung reduziert werden. Darüber hinaus fällt kein Abwasser an, wodurch dieser Prozess auch umweltfreundlicher gestaltet werden kann. Durch die Vermeidung von wässrigen Lösungen, wie eben alkalische Lösungen, können auch Korrosionsprobleme besser gehandhabt werden. Die Vermeidung einer zusätzlichen Haftvermittlerschicht reduziert ebenfalls die Kosten für die Beschichtung. Es ist mit der Aktivierung über Plasma eine sehr gute Bindungsqualität der darauf aufgebrachten Beschichtung erzielbar, sodass also auch der Anteil an Ausschuss reduziert werden kann. Generell ist diese Verfahrenstechnik einfach zu handhaben und der Automatisierung besser zugänglich. Neben dem besseren Haftvermögen wird auch eine höhere Homogenität der darauf aufgebrachten Beschichtung erreicht. Die hohe Prozessstabilität ermöglicht weiters eine einfache Prozesskontrolle. Durch die Erhöhung der Oberflächenspannung der metallischen Oberflächen wird gleichzeitig auch der Oberflächenspannungsunterschied zur Oberflächenspannung der Beschichtung erhöht und damit die Benetzbarkeit der metallischen Oberfläche und in der Folge damit die Haftfestigkeit der Beschichtung verbessert. Durch die Vermeidung der Phosphatierung und damit verbunden die Vermeidung der Erhöhung der Oberflächenrauhigkeit aufgrund dieser Phosphatierung ist es möglich, die Beschichtung mit geringeren Schichtdickentoleranzen, die im beschriebenen Stand der Technik immer als Problem dargestellt wurden, da damit die Zustellung des zweiten Verzahnungselementes ungenau wird, auszuführen.

Der Vollständigkeit halber sei angemerkt, dass unter Plasma ein teilweise ionisiertes Gas verstanden wird.

Obwohl es im Rahmen der Erfindung möglich ist, sowohl oxidierende als auch reduzierende Plasmen zu verwenden wird bevorzugt ein Sauerstoffplasma eingesetzt. Dies vor allem deswegen, da an den zu beschichtenden Metalloberflächen sehr häufig aus vorangehenden Prozessen der Herstellung der Verzahnungselemente Öle, wie z.B. Schneidöle oder dgl., anhaften. Durch die Verwendung eines Sauerstoffpläsmas kann gleichzeitig auch eine Reinigung der Oberfläche durchgeführt werden, das Verzahnungselement kann dabei auf die Kathode gelegt bzw. als Kathode angeschlossen werden, bzw. wird bevorzugt ein Mikrowellenplasma verwendet, sodass angeregter Sauerstoff oder Sauerstoffionen auf die Oberflächen des Verzahnungselementes hin beschleunigt werden. Dabei lösen die Ionen durch direkt Impulsübertrag Atome bzw. Moleküle von der Oberfläche ab und es bilden sich aus diesen Kohlenwasserstoffbruchstücken Kohlendioxid und Wasser.

Unter Sauerstoffplasmen wird im Sinne der Erfindung ein Plasma verstanden, das einen Stauerstoffgehalt aufweist. Daneben können auch andere Gase, wie z.B. Argon, enthalten sein. Der Anteil des Sauerstoffes an diesem Gasgemisch ist bevorzugt ausgewählt aus einem Bereich mit einer unteren Grenze von 40 Vol.-% und einer oberen Grenze von 100 Vol.-%, insbesondere ausgewählt aus einem Bereich mit einer unteren Grenze von 80 Vol.-% und einer oberen Grenze von 100 Vol.-%.

Von Vorteil ist dabei wiederum ein hoher Reinigungsgrad der Oberfläche bspw. ein hoher Entfettungsgrad und eben die bereits angesprochene Prozessstabilität. Darüber hinaus ist nach dieser Behandlung der Oberfläche keine Trocknung erforderlich.

Es hat sich im Zuge der Erfindung als Vorteil herausgestellt, dass die Plasmabehandlung bei einer Temperatur durchgeführt wird, die ausgewählt ist aus einem Bereich mit einer unteren Grenze von 40°C und einer oberen Grenze von 100°C. Bei Temperaturen unterhalb von 40°C war die Reinigungswirkung des Plasmas ungenügend bzw. konnte die Reinigung der Oberfläche nur über einen längeren Zeitraum erfolgen. Bei Temperaturen oberhalb von 150°C können ungewünschte Gefügeänderungen im Verzahnungselement auftreten, welche die Bauteilcharakteristik, insbesondere die Härte der Oberfläche, negativ beeinflussen können. Insbesondere ist diese Temperatur der Plasmabehandlung ausgehend aus einem Bereich mit einer unteren Grenze von 45 °C und einer oberen Grenze von 90C, bevorzugt ausgewählt aus einem Bereich mit einer unteren Grenze von 50 °C und einer oberen Grenze von 80°C.

Des Weiteren hat sich als positiv herausgestellt, wenn die Plasmabehandlung bei einem Druck durchgeführt wird, der ausgewählt ist aus einem Bereich mit einer unteren Grenze von 0,1 mbar und einer oberen Grenze von 200 mbar. Zwar ist es prinzipiell möglich im Rahmen der Erfindung neben einem Niederdruckplasma auch ein Atmosphärendruckplasma zu verwenden, jedoch bewirkt die höhere Anzahl an aktivierten, beschleunigten Gasionen bzw. Gasatomen in der Behandlungskammer einen Verlust an Energie aufgrund Zusammenstöße dieser Ionen bzw. Atomen untereinander in der Beschleunigungsstrecke zwischen Anode und Kathode. Es wird also ein Teil der Energie nicht auf die Oberfläche des Verzahnungselementes übertragen sondern geht in Form von Stoßenergie zwischen den Atomen verloren.

Insbesondere wird dieser Druck für die Plasmabehandlung ausgewählt aus einem Bereich mit einer unteren Grenze von 0,1 mbar und einer oberen Grenze von 10 mbar, bevorzugt aus einem Bereich mit einer unteren Grenze von 0,2 mbar und einer oberen Grenze von 0,7 mbar.

Zur Erzielung einer möglichst homogenen Beschichtung mit einer geringen Schichtdickentoleranz ist es von Vorteil, wenn die Oberflächenspannung der metallischen Oberfläche des Verzahnungselementes um zumindest 10 % im Vergleich zur Oberflächenspannung vor de Behandlung erhöht wird, bzw. wenn die Oberflächenspannung zumindest 40 mN/m beträgt. Insbesondere wird dabei die Oberflächenspannung der metallischen Oberfläche um einen Wert von zumindest 20 %, bevorzugt um einen Wert von zumindest 30 % erhöht bzw. beträgt die Oberflächenspannung mindestens 50 mN/m, bevorzugt mindestens 60 mN/m. Es kann damit die Haftfestigkeit der Beschichtung an der metallischen Oberfläche verbessert werden, sodass höhere Schichtdicken der Beschichtung mit nur einem einmaligen Auftrag erreicht werden können.

Es ist dabei von Vorteil, wenn die Plasmabehandlung bei einer Wechselspannung durchgeführt wird, die ausgewählt ist aus einem Bereich mit einer unteren Grenze von 10 GHz und einer oberen 3 GHz. Bei Wechselspannungen unterhalb von 10 kHz wurde eine deutliche Verlangsamung der Aktivierung der Oberfläche des Verzahnungselementes beobachtet. Oberhalb von 3 GHz konnte keine weitere Verbesserung des Verfahrens, das heißt der Plasmabehandlung, beobachtet werden.

Insbesondere wird die Plasmabehandlung bei einer Wechselspannung durchgeführt mit einer Frequenz die ausgewählt ist aus einem Bereich mit einer unteren Grenze von 50 kHz und einer oberen Grenze von 100 MHz, bevorzugt ausgewählt aus einem Bereich mit einer unteren Grenze von 100 kHz und einer oberen Grenze von 50 MHz, bzw. wird die Frequenz der Wechselspannung ausgewählt aus einem Bereich mit einer unteren Grenze von 0,5 GHz und einer oberen Grenze von 3 GHz, bevorzugt aus einem Bereich mit einer unteren Grenze von 1,5 GHz und einer oberen Grenze von 2,5 GHz.

Es ist weiters möglich, dass die zu beschichtende Oberfläche vor der Behandlung mit dem Plasma einer zumindest einmaligen Reinigung, bevorzugt mehrmaligen Reinigung, mit zumindest einem öllösenden Reinigungsmittel unterzogen wird. Es kann damit ein höherer Reinigungsgrad der Oberfläche erzielt werden und die Reinigungswirkung des Plasmas durch die Verwendung von öllösenden Reinigungsmitteln verbessert werden, da derartige Reinigungsmittel üblicherweise im Vergleich zu öligen Rückständen eine deutlich kürzere Kettenlänge in der Struktur aufweisen und damit deren Abbaubarkeit im Plasma deutlich verbessert ist.

Diese Reinigung wird bevorzugt teilweise unter Vakuum durchgeführt womit erreicht werden kann, dass das verwendete öllösende Reinigungsmittel bereits bei tieferen Temperaturen verdampft und zudem die Verdampfung rascher erfolgt, wobei während des Verdampfens zumindest ein Teil der öligen Rückstände auf der metallischen Oberfläche vom Lösungsmittel, das heißt, Reinigungsmittel, mitgerissen werden. Je nach gewünschten Reinigungsgrad bzw. der Leistungsfähigkeit der Reinigungswirkung des Sauerstoffplasmas bzw. oxidierenden Plasmas kann diese Behandlung mehrfach durchgerührt werden. Zur Reinigung werden die Verzahnungselemente - bevorzugt werden mehrere Verzahnungselemente gleichzeitig dieser Handlung unterzogen - in einer evakuierbaren Kammer mit dem Reinigungsmittel versetzt, bspw. wird diese Kammer mit dem Reinigungsmittel geflutet, danach das Reinigungsmittel abgepumpt und Reste des Reinigungsmittels durch Anlegen eines Vakuums entfernt und damit die Oberfläche des Verzahnungselementes wieder getrocknet.

Als Reinigungsmittel wird bevorzugt Perchlorethylen verwendet, da Perchlorethylen eine sehr kurze und damit im Plasma leicht abbaubare Molekülkette aufweist und zudem Perchlorethylen einen sehr niedrigen Siedepunkt aufweist im Vergleich zu anderen öllösenden Reinigungsmitteln. Durch den niedrigen Siedepunkt ist damit auch die Entfernbarkeit, das heißt, die Trocknung der Oberfläche, einfach und kann rasch durchgeführt werden.

Mit dem erfindungsgemäßen Verfahren ist es vorteilhafter Weise auch möglich, diese Verzahnungselemente nicht wie bisher üblich aus schmelzmetallurgisch hergestellten Bauteilen zu fertigen sondern können damit auch Sinterbauteile, das heißt, Verzahnungselemente aus Sinterwerkstoffen, eingesetzt werden, die bekanntlich eine gewisse Restporosität aufweisen, da die angewandte Reinigung, insbesondere unter Anwendung eines Vakuums, eine höherer Tiefenwirkung aufweist und aufgrund des Abdampfens des Reinigungsmittels unter Vakuum, insbesondere von Perchlorethylen auch die Poren des Sinterwerkstoffes gereinigt, insbesondere entfettet, werden können. Es können als damit Verzahnungselemente beschichtet werden und deren Zahnflankenspiel eingestellt werden, die in ihrer Herstellung nicht nur kostengünstiger im Vergleich zu schmelzmetallurgisch hergestellten Verzahnungselementen sind, sondern darüber hinaus auch den Vorteil aufweisen, dass diese kostengünstiger mit höherer Genauigkeit der Geometrie der Verzahnung hergestellt werden können.

Es ist dabei von Vorteil, wenn das Verzahnungselement einen Grundkörper aufweist, der zumindest in oberflächennahen Bereichen eine Porosität aufweist, die ausgewählt ist aus einem Bereich mit einer unteren Grenze von 0,1 % und einer oberen Grenze von 20 %, da die Reinigung und Aktivierung einfacher erfolgen kann und der damit ausgestaltet Antrieb ein besseres Ölrückhaltevermögen aufweist, wodurch dies Antriebe an sich vorteilhafter sind und somit nach dem erfindungsgemäßen Verfahren auch derartige sintertechnisch hergestellte Verzahnungselemente hinsichtlich ihres Zahnflankenspiels bspw. des Verdrehwinkels nach dem erfindungsgemäßen Verfahren eingestellt werden können.

Zum besseren Verständnis der Erfindung wird diese anhand der nachfolgenden Figuren näher erläutert:
Es zeigen in jeweils stark schematisch vereinfachter Darstellung:
   - Fig. 1: einen Ausschnitt aus einem Antrieb mit zwei kämmenden Zahnrädern;
   - Fig. 2: ein Detail der zwei Zahnräder im Eingriffsbereich nach der Montage der Zahnräder;
   - Fig. 3: das Detail nach Fig. 2 nach erfolgtem Einlauf;
   - Fig. 4: die Einstellung des Zahnflankenspiels zweier kämmender Zahnräder, ausschnittsweise;
   - Fig. 5: eine Beschichtungsvorrichtung zur Teilbeschichtung von Verzahnungselementen in Draufsicht;
   - Fig. 6: die Beschichtungsvorrichtung nach Fig. 6 in einer anderen Winkelstellung der Verzahnungselemente;
   - Fig. 7: eine Seitenansicht der Beschichtungsvorrichtung nach Fig. 6;
   - Fig. 8: eine Ausführungsvariante zur Beschichtungsvorrichtung nach Fig. 6;
   - Fig. 9: die Beschichtungsvorrichtung nach Fig. 9 in Seitenansicht;
   - Fig. 10: ein Schliffbild eines Oberflächenbereichs eines beschichteten Zahns.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

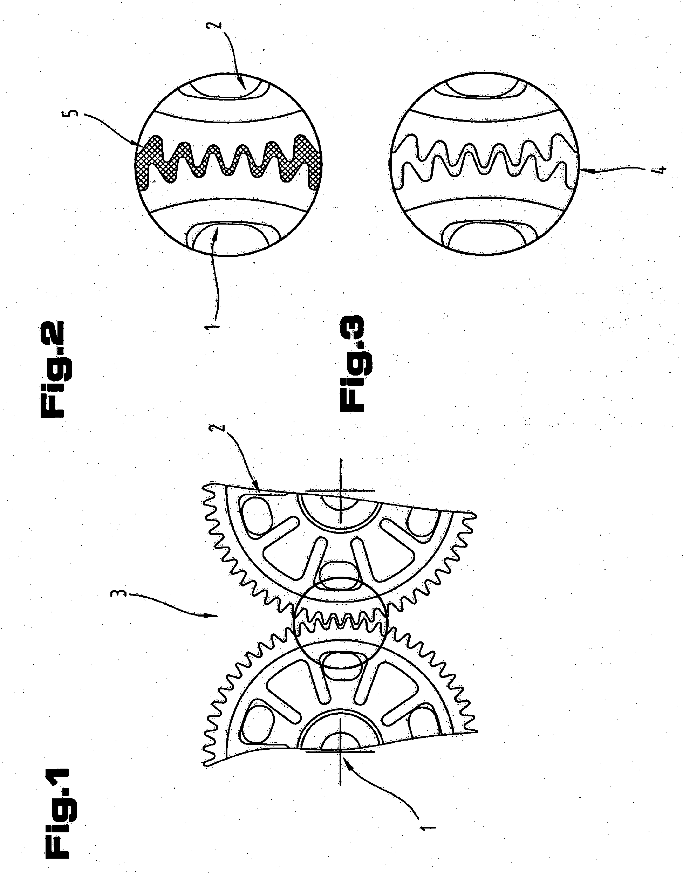

In Fig. 1 sind zwei Verzahnungselemente 1, 2 eines Antriebes 3 ausschnittsweise in jenem Bereich dargestellt, in dem diese Verzahnungselemente 1, 2 miteinander kämmen. Diese Verzahnungselemente 1, 2 sind dabei in Form von Zahnrädern eines Stirnradantriebes ausgebildet. Bspw. kann es sich hierbei um ein Getriebe für Ausgleichswellen für den Massenausgleich handeln. Prinzipiell sind aber von der Erfindung sämtliche Antriebe mit Verzahnungselementen 1, 2, wie bspw. Ölpumpenantriebe oder dgl., mit umfasst ebenso wie Verzahnungselemente 1, 2, bspw. Zahnräder, die in Schneckenantriebe eingreifen. Des Weiteren müssen diese Zahnräder bzw. Verzahnungselemente 1, 2 nicht eine Geradverzahnung wie in Fig. 1 dargestellt aufweisen, sondern können diese auch Schrägverzahnungen bzw. beliebige Arten von Verzahnungen aufweisen, wobei auch die Zahnform selbst beliebig ausgebildet sein, wie bspw. mit geraden Flanken oder mit einer Evolventenverzahnung bzw. balligen Zahnform. Die Erfindung ist also nicht auf die in den Fig. dargestellten Arten von Verzahnungselementen 1, 2 bzw, Antrieben 3 beschränkt. Insbesondere betrifft die Erfindung sämtliche Arten von kämmenden Verzahnungselementen 1, 2, für die ein Zahnflankenspiel 4 eingestellt wird, wie dies in Fig. 3 dargestellt ist, wobei in Fig. 3 dieses Zahnflankenspiel lediglich schematisch angedeutet ist. Da die Ausbildung eines Zahnflankenspiels 4 ohnehin zum üblichen Fachwissen des auf dem Gebiet des Maschinenbaus tätigen Fachmannes gehört, ist eine detaillierte Darstellung an dieser Stelle nicht erforderlich.

In den Fig. 2 und 3 ist das Prinzip der Erfindung dargestellt. So wird auf zumindest eines der Verzahnungselemente 1, 2 eine Polymerbeschichtung 5 aufgetragen, sodass die beiden Verzahnungselemente 1, 2 nach deren Montage und vor Inbetriebnahme des Antriebes 3 ohne Spiel zueinander, das heißt, ohne Abstand zueinander, montiert werden können, beispielsweise durch achsparallele Verschiebung des Verzahnungselements 2 in Richtung auf das Verzahnungselemente 1. Da die Beschichtung 5 abreibbar ist, entsteht bereits nach kurzer Zeit das Zahnflankenspiel 4, also der Zahnzwischenraum, wie dies in Fig. 3 angedeutet ist.

Die Polymerbeschichtung 5 selbst kann den Stand der Technik entsprechend ausgebildet sein. So besteht diese aus einem Bindemittel in dem zumindest ein Füllstoffverteilt angeordnet ist. Das Bindemittel kann organisch sein. Bei dem Füllstoff kann es sich um übliche Füllstoffe wie Carbonate und Silikate handelt, wobei auch hier wiederum vorzugsweise als Füllstoffe zumindest ein Festschmierstoff enthalten ist.

Als Polymermaterial sind prinzipiell alle Kunstharze geeignet, wie sie bspw. in der WO 02/ 48575 A beschrieben sind. Diese Polymermaterial kann bspw. ausgewählt sein aus einer Gruppe umfassend Phenolharze, Aminharze, Alkydharze, Polyvinylacetal, Epoxidharze, Polyurethanharze, Polyesterharze, chloriertes Polypropylen, Ketonharze, Acrylatharze, StyrolButadien-Copolymere, Polyamide, Polyimide, Polyesterimide, Polyetherimide und Polyamidimide oder deren Mischungen. Bevorzugt wird als Polymermaterial ein Polyamidimid verwendet. Ebenso sind Vorstufen dieser Harze, wie bspw. Poly (carbamoylcarbonsäure) im Falle Polyamidimid, einsetzbar.

Der Festschmierstoff kann ausgewählt sein aus einer Gruppe umfassend anorganische Festschmierstoffe, wie Graphit, MoS₂, Bortrioxid, hexagonales BN, WS₂, Bleimonoxid, basisches Bleicarbonat, Menninge und Gläser. Aufgrund der Umweltproblematik hinsichtlich der Toxizität von Bleiwerkstoffen wird bevorzugt Graphit und/oder MoS₂ verwendet. Ebenso kann als Festschmierstoff Polytetrafluorethylen partikelförmig eingesetzt werden.

Das Polymermaterial kann in einem geeigneten Lösungsmittel gelöst oder dispergiert sein und der Füllstoff, insbesondere der Festschmierstoff, wird ebenfalls in dieser Lösung bzw. Dispersion dispergiert. Zur Herstellung dieser Dispersionen können handelsübliche Dispergiervorrichtungen verwendet werden.

Als Lösungsmittel können für derartige Lacke bzw. Lösungen oder Dispersionen übliche Lösungsmittel verwendet werden, bspw. Toluol, Xylol bzw. andere organische Kohlenwasserstoffe, ebenso wie Lösungsmittelgemische, bspw. das in der DE 10 2005 013 867 A beschriebene ein Gemisch aus 2-Metyl-2-pentanol-4-on mit Dimethylbenzol, Toluol und N-Methylpyrrolidon.

Im Hinblick auf die Teilchengröße des Festschmierstoffes sei erwähnt, dass diese im Bereich zwischen 1 µm und 60 µm betragen kann, wobei insbesondere plättchenförmiges MoS₂ verwendet wird, mit einer Plättchengröße ausgewählt aus einem Bereich mit einer unteren Grenze von 10 µm x 10 µm x 0,5 µm und einer oberen Grenze von 40 µm x 40 µm x 5 µm (mittlere Länge x mittlere Breite x mittlere Höhe).

Derartige Beschichtungen sind, wie dies aus dem Stand der Technik bekannt ist, abreibbar, und zwar innerhalb kurzer Zeit. Es ist damit gemeint, dass diese Polymerbeschichtung 5 aufgrund des kämmenden Eingriffes der Verzahnungselemente 1, 2, und der damit ausgeübten mechanischen Belastung der Polymerbeschichtung 5, sich innerhalb von 240 s, insbesondere innerhalb von 60 s, nach Inbetriebnahme abreibt. Aufgrund dessen werden insbesondere Polymermaterialen bzw. Festschmierstoffe verwendet, die ölverträglich sind, sodass, nachdem sich diese Polymerbeschichtungen 5 partikelförmig abreiben, im Schmieröl, mit dem die Verzahnungselemente 1, 2 benetzt werden, keine Probleme auftreten.

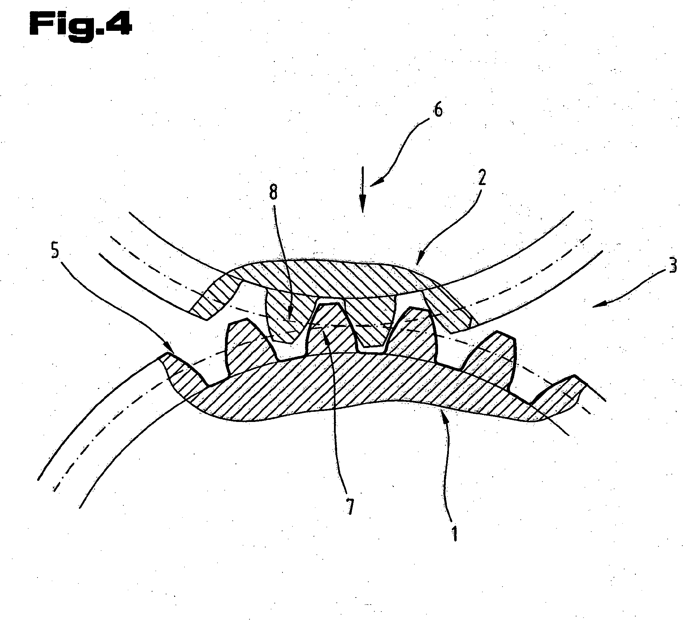

Fig. 4 zeigt die Einstellung des Zahnflankenspiels 4 (Fig. 3) zwischen den beiden miteinander kämmenden Verzahnungselementen 1, 2. Dazu wird das mit der Polymerbeschichtung 5 versehene erste Verzahnungselement 1 an dem Antrieb 3 montiert und in der Folge das zweite Verzahnungselement 2, welches im Falle der Ausführungsvariante nach Fig. 4 keine Polymerbeschichtung 5 aufweist, mit einer vorbestimmbaren Kraft (Pfeil 6) so zum ersten Verzahnungselement 1 zugestellt, dass zwischen Zähnen 7, 8 der beiden Verzahnungselemente 1, 2 zumindest im Zahnflankenbereich kein Spalt ausgebildet ist, also die Zähne 7, 8 zumindest im Zahnflankenbereich der Verzahnungselemente 1, 2 aneinander anliegen.

Diese Montage entspricht jener wie sie aus den eingangs genannten Dokumenten zum Stand der Technik bekannt ist.

Bei dieser Ausführungsvariante ist lediglich ein Verzahnungselement 1 mit der Polymerbeschichtung 5 versehen, wobei bei der Ausführungsvariante nach Fig. 4 die gesamten Zähne, das heißt, sowohl die beiden Zahnflanken, also die vordere und die hintere Zahnflanke, als auch der Zahnkopf und der Zahnfuß mit der Polymerbeschichtung 5 versehen sind. Im Rahmen der Erfindung ist es allerdings auch möglich, dass nur die Zahnflanken bzw. bspw. nur die vordere oder nur die hintere Zahnflanke eines Verzahnungselementes 1 mit der Polymerbeschichtung versehen ist. Ebenso ist es möglich, dass beide Verzahnungselemente 1, 2, das heißt, deren Zähne 7, 8, vollflächig, also wiederum sowohl entlang der vorderen als auch der hinteren Zahnflanke ebenso wie am Zahnkopf und am Zahnfuß mit einer Polymerbeschich-. tung 5 versehen sind bzw. das beide Verzahnungselemente 1, 2 nur an den vorderen oder hinteren oder eines der Verzahnungselemente 1, 2 an der vorderen Zahnflanke und das zweite Verzahnungselement an der hinteren Zahnflanke mit der Polymerbeschichtung 5 versehen sind.

Durch diese Art der Zustellung des zweiten Verzahnungselementes 2 zum ersten Verzahnungselement 1 sowie durch die abreibbare Polymerbeschichtung 5, die innerhalb kurzer Zeit nach dem Einlauf bzw. während des Einlaufes des Antriebes 3 sich aufgrund der mechanischen Belastung durch die kämmenden Zähne 7, 8 abreibt, wird in der Folge das gewünschte Zahnflankenspiel 4 (Fig. 3) erreicht.

Für die Herstellung der Polymerbeschichtung 5 ist nun erfindungsgemäß eine Vorbehandlung mittels Plasma, insbesondere mittels Sauerstoffplasma vorgesehen. Diese Vorbehandlung, das heißt, die Aktivierung der Oberfläche der Zähne 7, 8 auf die die Polymerbeschichtung 5 aufgetragen wird, erfolgt dabei innerhalb einer Zeitspanne von 1 min und 30 min, insbesondere bei einer Temperatur von 40 °C bis 70 °C und bei einem Druck von 0,2 mbar bis 0,7 mbar. Von Vorteil ist dabei, dass keine Erhöhung der Oberflächenrauhigkeit durch diese Aktivierung im Vergleich zur Phosphatierung nach dem Stand der Technik auftritt, sodass also eine bereits sehr glatte Oberfläche vorliegt, insbesondere weisen die Zähne 7, 8 einen arithmetischen Mittenrauwert Ra nach DIN EN ISO 4287 ausgewählt aus einem Bereich von 0,2 µm bis 3 µm auf, wodurch durch die Polymerbeschichtung 5 keine hohe Oberflächenrauhigkeit, wie sie aus dem Stand der Technik bekannt ist, ausgeglichen werden muss, sodass es also möglich ist, sehr gleichmäßige Schichten der Polymerbeschichtung 5 mit geringer Schichtdickentoleranz aufzutragen. Es wird damit die Einstellung des Zahnflankenspiels 4 genauer. Insbesondere ist dabei auch von Vorteil, dass nach dem Abrieb der Polymerbeschichtung 5 nicht eine raue Oberfläche einer Phosphatierung mit den jeweiligen anderen Verzahnungselement 1, 2 zusammenwirkt, wodurch ein entsprechend erhöhter Abrieb in dieser Einlaufphase auftreten kann, sondern die bereits sehr ebene Oberflächen vorhanden sind und damit auch die Tribologie in der Einlaufphase dieses Antriebes 3 bereits verbessert ist. Gegebenenfalls kann eine Tiefenreinigung, insbesondere wenn die Verzahnungselemente 1,2 aus einem Sinterwerkstoff hergestellt sind, bspw. einem Sinterstahl oder einem eisenbasierten Sinterwerkstoff, mittels geeigneter Lösungsmittel erfolgen. Es ist damit möglich auch die in Sinterwerkstoffen üblicherweise vorhandenen Poren entsprechend zu reinigen und damit Öl- bzw. Schmiermittelrückstände aus der Vorbehandlung der Verzahnungselemente 1, 2, wie sie üblicherweise bei der Herstellung dieser Verzahnungselemente 1,2 verwendet werden, bspw. Schmiermittel, die das Festfressen der Verzahnungselemente 1, 2 in den jeweiligen Matrizen bzw. Formen verhindern, zu entfernen. Dazu wird das bzw. werden die Verzahnungselemente 1, 2 bevorzug in eine Kammer die evakuierbar ist eingeschleust, diese Kammer mit dem jeweiligen Lösungsmittel, bspw. Perchlorethylen, geflutet, danach dieses Lösungsmittel abgepumpt und die Kammer evakuiert wird, sodass das Lösungsmittel verdampft und dabei die anhaftenden Verschmutzung, bspw. die öl- bzw. schmiermittelhältigen Rückständen an den Verzahnungselementen 1, 2, mitreißt. Um die Reinigungswirkung zu erhöhen, kann dieser Vorgang mehrmals durchgeführt werden. Zusätzlich dazu bzw. ergänzend dazu kann die Plasmaaktivierung der Oberfläche zur Erhöhung der Oberflächenspannung der Verzahnungselemente 1, 2 auch für die Reinigung der Oberfläche bzw. für die Tiefenreinigung der Verzahnungselemente 1, 2 herangezogen werden, in dem ein Sauerstoffplasma bzw. ein oxidierendes Plasma verwendet wird mit dem, nachdem die öl- bzw. schmiermittelhältigen Rückstände aus den Vorprozessen üblicherweise Kohlenwasserstoffe sind, diese aufgespalten und in CO₂ und Wasser umgewandelt werden.

Nach dieser erfindungsgemäßen Vorbehandlung erfolgt die Beschichtung der Verzahnungselemente 1, 2 auf den hierfür vorgesehenen Oberflächenbereichen, dass heißt, insbesondere der Oberflächen der Zähne 7, 8. Diese Polymerbeschichtung 5 kann dem Stand der Technik entsprechend aufgetragen werden bzw. mit herkömmlichen Verfahren wie sie aus dem Bereich der Anstrichmittel oder Lacke bekannt sind, durchgeführt werden. Es sind also bspw. lösungsmittelfreie, elektrostatische Pulverbeschichtungen möglich, ebenso kann das Bindemittel, insbesondere das Polymermaterial, in einem Lösungsmittel gelöst werden bzw. darin dispergiert werden und dieser Lösung bzw. dieser Dispersion der Füllstoff, das heißt, insbesondere der Festschmierstoff, zugesetzt werden. Anschließend können diese Verzahnungselemente 1, 2 in dieses Gemisch im Tauchverfahren eingetaucht werden und somit die Oberfläche beschichtet werden bzw. sind auch Schleuderverfahren oder Sprühverfahren durchführbar. Nach dem Auftrag dieser Lösung bzw. Dispersion wird das Lösungsmittel bspw. durch Erwärmen verdunstet, sodass der darin gelöste Feststoff an der Oberfläche zurückbleibt. Falls erforderlich kann das aufgebrachte Gemisch aus dem Polymermaterial mit dem Füllstoff auch noch gehärtet werden, bspw. durch UV- oder Elektronenstrahlhärtung oder durch Temperaturerhöhung.

Es ist weiters möglich, falls dies erforderlich ist, die Polymerbeschichtung 5 aus mehreren Einzelschichten aufzubauen, also den Beschichtungsvorgang wiederholt durchzuführen. Gegebenenfalls kann dazwischen eine (Aus)Härtung der einzelnen Teilschichten erfolgen, wobei es für den besseren Zusammenhalt der Polymerbeschichtung 5 günstiger ist, wenn diese Härtung nicht zur Gänze durchgeführt wird, sondern die Oberfläche noch gelatös ist. Über die Temperatur zur Entfernung des Lösungsmittels, die bspw. zwischen 180 °C und 240 °C betragen kann, kann auch der Vernetzungsgrad bzw. die Kettenlänge des Polymermaterials während der Härtung gesteuert werden. Je niedriger die Erwärmungstemperatur ist, desto unvollständiger wird die Härtung sein und dadurch die Polymerbeschichtung im Einlauf, das heißt im Probelauf des Antriebes 3, leichter entfernbar sein.

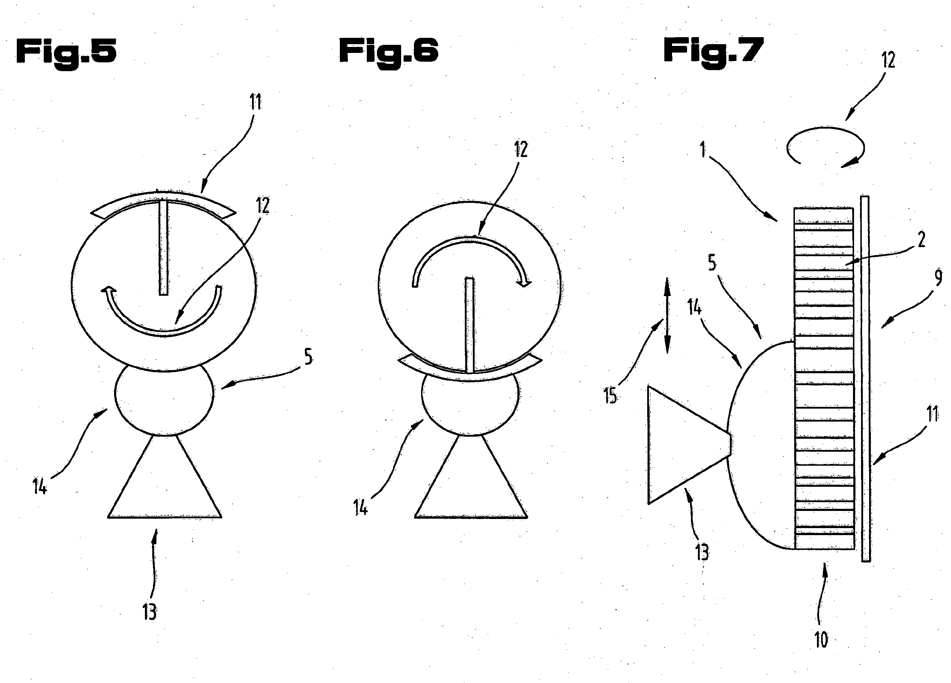

Bevorzugt erfolgt der Auftrag der Polymerbeschichtung 5 im Sprühverfahren, wie dies in den Fig. 5 bis 9 für zwei Ausführungsvarianten dargestellt ist. Die Fig. 5 bits 7 zeigen dabei eine Beschichtungsvorrichtung 9 die dafür vorgesehen ist, eine partielle Beschichtung der Zähne 7, 8 der Verzahnungselemente 1,2 durchzuführen. Mit partiell ist damit gemeint, dass diese Verzahnungselemente 1, 2 nicht über die gesamten 360 ° sondern bspw. nur in einem Winkelbereich zwischen 0 ° oder 270 ° mit der Polymerbeschichtung 5 versehen werden. Dieser Winkelbereich ist selbstverständlich nicht beschränkend sondern frei wählbar, je nach den Anforderungen an das Verzahnungselement 1, 2. Die einzelnen Verzahnungselemente 1, 2 sind dabei auf einer Haltevorrichtung 10 angeordnet. Bspw. kann diese Haltevorrichtung 10 wellenartig ausgebildet sein und durch die Bohrungen der Verzahnungselemente 1, 2 geführt sein, welche für die Aufnahme der Verzahnungselemente 1, 2 auf den entsprechenden Wellen des Antriebes 3 vorgesehen sind, sodass also mehrere Verzahnungselemente 1, 2 turmartig übereinander auf dieser Haltevorrichtung 10 angeordnet sind.

Es sei jedoch erwähnt, dass es im Rahmen der Erfindung selbstverständlich möglich ist, auch Einzelbeschichtungen durchzuführen, das heißt, jeweils ein Verzahnungselement 1,2 während einer Beschichtung zu beschichten.

Um die partielle Beschichtung zu ermöglichen, wird ein Teil des Verzahnungselementes 1, 2, das heißt, dessen Oberfläche mit einer Blende 11 abgedeckt, die eine Breitenausdehnung aufweist, die der Breite des nicht zu beschichtenden Bereichs entspricht.

Die Haltevorrichtung 10 ist in der Beschichtungsvorrichtung 9 drehbar gehaltert und wird während der Beschichtung gedreht, entsprechend Kreispfeil 12.

Die Beschichtung nach dieser Ausführungsvariante erfolgt im Sprühverfahren, wozu zumindest eine Düse 13 in der Nähe der Haltevorrichtung 10, das heißt, der Verzahnungselemente 1, 2 angeordnet ist, und geht von dieser Düse 13 ein Sprühnebel 14 aus, der die oben genannte Dispersion bzw. Lösung in Richtung auf die Oberfläche der Verzahnungselemente 1, 2 abgibt. Wie in der Draufsicht entsprechend Fig. 5 und 6 zu sehen ist, wird aufgrund der Umdrehung der Verzahnungselemente 1, 2 auf der Haltevorrichtung 10 die Blende 11 entsprechend Fig. 6 in den Bereich des Sprühnebels 14 verbracht, sodass in diesem Bereich die Blende 11 mit dem Sprühnebel beschichtet wird und daher die darunter liegenden Oberflächen der Verzahnungselemente 1, 2 frei von der Beschichtung sind.

Die Blende 11 kann ebenfalls an der Haltevorrichtung 10 befestigt sein, wie dies in den Fig. 5 und 6 angedeutet ist.

Aus Fig. 7 ist ersichtlich, dass die Sprühvorrichtung, insbesondere die Düse 13, vertikal verfahrbar, entsprechend Doppelpfeil 15, in der Beschichtungsvorrichtung 9 angeordnet ist. Durch diese vertikale Verfahrbarkeit ist es auf vorteilhafter Weise möglich, eine größere Anzahl an Verzahnungselementen 1, 2 auf der Haltevorrichtung 10 turmartig anzuordnen, wie dies aus Fig. 7 ersichtlich ist, und gleichzeitig zu beschichten, wodurch die Kosten für diese Beschichtung reduziert werden können bzw. ein höherer Ausstoß an Fertigprodukten möglich wird.

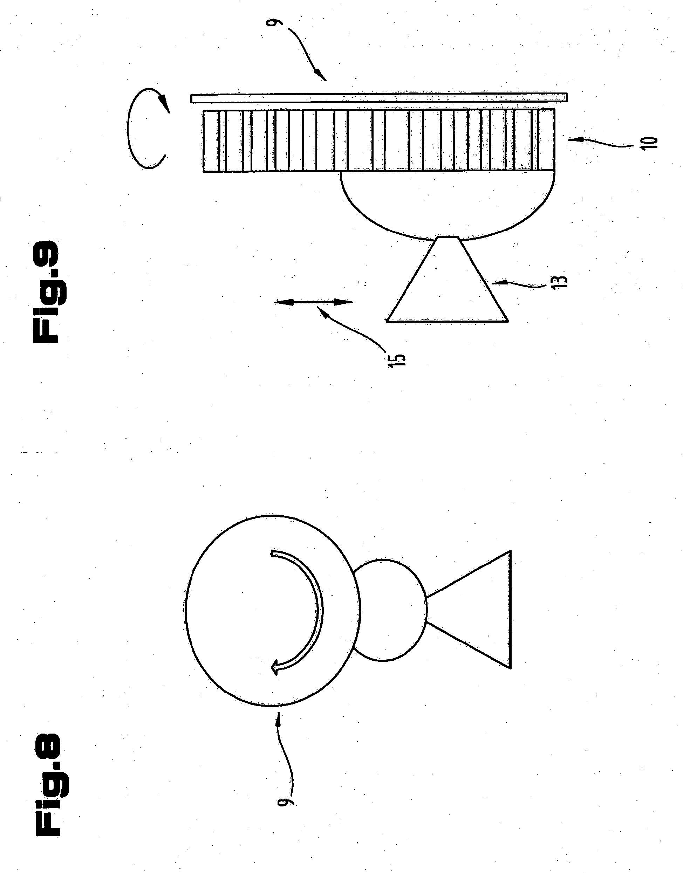

Die Beschichtungsvorrichtung 9 nach den Fig. 8 und 9 entspricht im Wesentlichen der Ausführungsvariante nach den Fig. 5 bis 7 mit der Ausnahme, dass bei dieser Beschichtungsvorrichtung 9 nach den Fig. 8 und 9 keine Blende 11 angeordnet ist und somit die Polymerbeschichtung 5 auf den Zähnen 7, 8 der Verzahnungselemente 1, 2 über 360 ° erzeugt wird. Auch bei dieser Ausführungsvariante ist wiederum eine rotierende Halterung der Verzahnungselemente 1, 2 auf der Haltevorrichtung 10 vorgesehen und eine vertikal verfahrbare Sprüheinrichtung mit der Düse 13.

Die vertikale Verfahrbarkeit der Sprühvorrichtung ist im Rahmen der Erfindung nicht zwingend erforderlich. Beispielsweise kann ausschließlich eine rotierende Haltevorrichtung 10 für die Beschichtung vorgesehen werden.

Die Rotationsgeschwindigkeit der Haltevorrichtung 10 für die Verzahnungselemente 1, 2 kann bei beiden Ausführungsvarianten ausgewählt sein aus einem Bereich mit einer unteren Grenze von 60 Umdrehungen/min und einer oberen Grenze 120 Umdrehungen/min, bspw. 90 Umdrehungen/min betragen.

Die 360 ° Beschichtung hat gegenüber ein partiellen Beschichtung den Vorteil, dass keine Positionsmarken auf den Verzahnungselementen 1, 2 angebracht werden müssen und damit auch während des Zusammenbaus des Antriebes 3, das heißt, der Positionierung der Verzahnungselemente 1, 2 nicht auf diese Positionsmarken geachtet werden muss, sondern diese Verzahnungselemente 1, 2 in jeder beliebigen Stellung zueinander eingebaut werden können. Es wird damit einerseits die Montage für den Monteur erleichtert bzw. ist damit auch eine höhere Automatisierung ohne gesonderte Positioniererkennungsvorrichtungen möglich.

### Ausführungsbeispiel:

Als Ausgangsmaterial wurde ein Zahnrad aus einem Sinterstahl hergestellt, welches eine Kerndichte im Bereich zwischen 6, 8 g/cm³ und 7,6 g/cm³ aufweist und das zusätzlich oberflächenverdichtet wurde, wobei die oberflächennahen Bereiche eine höhere Dichte aufweisen als die Kerndichte. Die Porosität des Verzahnungselementes 1 betrug in diesem Fall 5 %.

Dieses Zahnrad wurde in der Folge einer Reinigung mit Perchlorethylen unterzogen bei einer Temperatur von ca. 105 °C und einem Druck in der Vakuumkammer von 4 mbar während des Abdampfens des Lösungsmittels.

Die Tiefenreinigung wurde fünfmal wiederholt und wurde danach das trockene Zahnrad in eine Plasmabehandlungsanlage überführt. Es wurde darin ein Sauerstoffplasma verwendet, wobei der Sauerstoffanteil am Plasmagas 99.99% betrug. Die Temperatur für die Plasmabehandlung betrug 60 °C, der Druck 0,4 mbar und es wurde dabei eine Wechselspannung mit einer Frequenz von 2,45 GHz verwendet.

Die Plasmabehandlung wurde in einer Zeit von 5 min durchgerührt.

Danach wurde eine Beschichtung aus einem Polyamidimid mit MoS₂ als Festschmierstoff im Sprühverfahren aufgetragen, entsprechend der Ausführungsvariante nach den Fig. 8 und 9, wobei in diesem Fall lediglich eine Einzelbeschichtung eines einzigen Zahnrades durchgeführt wurde. Der Anteil des Polyamidimides an dieser Polymerbeschichtung 5 betrug dabei zwischen30 Gew.-% und 70 Gew.-%, jener des Festschmierstoffes zwischen 70 Gew.-% und 30 Gew.-%. Als Lösungsmittel wurde N-Methylpyrrolidon verwendet, wobei der Anteil des Lösungsmittels, bezogen auf die Festsubstänz, 60 Vol.-% betrug.

Nach dem Abdampfen, das heißt Verdunsten, des Lösungsmittels der Polymerbeschichtung 5 wurde diese Polymerbeschichtung 5 bei einer Temperatur zwischen 70 °C und 90 °C getrocknet bzw. gehärtet.

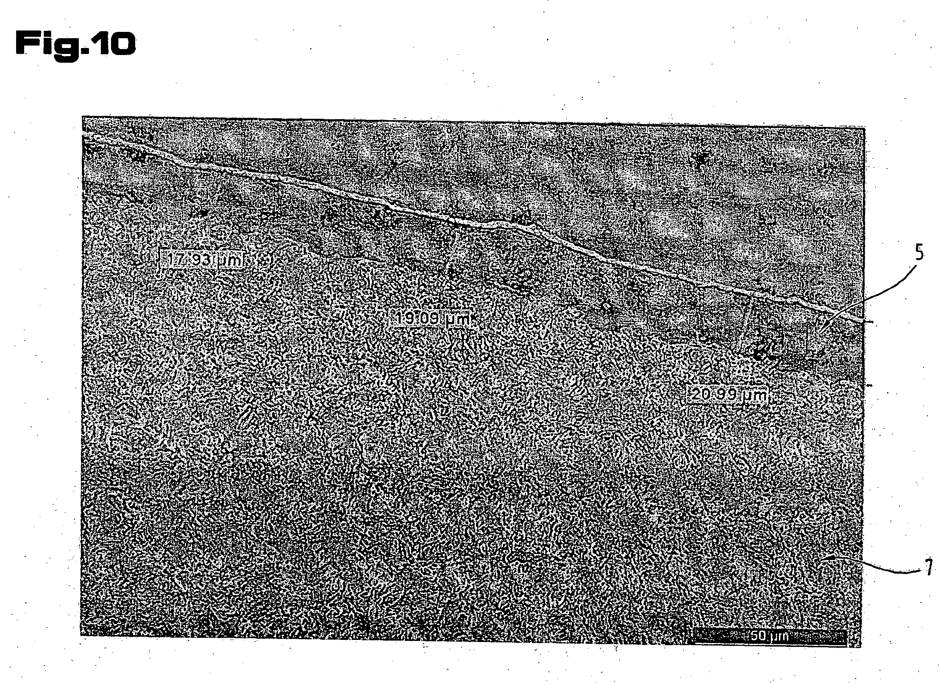

In Fig. 10 ist ein Ausschnitt der beschichteten Oberfläche des Zahnrades im Bereich des Zahnes 7 dargestellt. Es handelt sich hierbei um eine Mikroskop-Aufnahme mit einem Vergrößerungsfaktor von 500:1. Wie aus Fig. 10 sehr deutlich ersichtlich ist, liegt die Schichtdicke zwischen 18 µm und 21 µm, weist also eine deutlich geringere Schichtdickentoleranz auf, als dies in den Dokumenten zum Stand der Technik beschrieben worden ist.

Des Weiteren ist aus Fig. 10 deutlich ersichtbar, dass die Polymerbeschichtung 5 direkt auf die Oberfläche des Zahnes 7 aufgetragen ist, das heißt, ohne Zwischenanordnung von Haftvermittlerschichten, insbesondere von Phosphatierungsschichten.

Es können mit dem erfindungsgemäßen Verfahren Schichtdicken im Bereich zwischen 1 µm und 300 µm hergestellt werden, je nach dem welche Schichtdicke der Polymerbeschichtung 5 für die Herstellung des gewünschten Zahnflankenspiels 4 erforderlich ist.

Die Ausführungsbeispiele beschreiben mögliche Ausführungsvarianten des Beschichtungsverfahrens, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, däss zum besseren Verständnis des Aufbaus des Beschichtungsvorrichtung 10 und der Verzahnungselemente 1, 2 diese bzw. deren Bestandteile teilweise unmaßstäblich und/oder vergrößert dargestellt wurden.

Vor allem können die einzelnen in den Fig. 1, 2, 3; 4; 5, 6, 7; 8,9; 10 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Verzahnungselement
- 2: Verzahnungselement
- 3: Antrieb
- 4: Zahnflankenspiel
- 5: Polymerbeschichtung

- 6: Pfeil
- 7: Zahn
- 8: Zahn
- 9: Beschichtungsvorrichtung
- 10: Haltevorrichtung

- 11: Blende
- 12: Kreispfeil
- 13: Düse
- 14: Sprühnebel
- 15: Doppelpfeil

## Patentansprüche

1. Verfahren zur Herstellung einer, gegebenenfalls zumindest einen Festschmierstoff enthaltenden, abreibbaren Polymerbeschichtung (5) auf einer Oberfläche von Zähnen (7, 8) eines metallischen Verzahnungselementes (1, 2) für die Einstellung eines Zahnflankenspiels (4) zwischen den Zähnen (7, 8) von zwei kämmenden, Verzahnungselementen (1, 2), nach dem auf zumindest einem Teil einer Oberfläche der Zähne (7) zumindest eines Verzahnungselementes (1, 2) die abreibbare Polymerbeschichtung (5) aufgebracht wird, **dadurch gekennzeichnet, dass** die zu beschichtende Oberfläche vor dem Aufbringen der Polymerbeschichtung (5) in einem Plasma behandelt wird und danach die Polymerbeschichtung (5) direkt auf diese Oberfläche aufgebracht wird.

2. Verfahren nach Anspruch 1, **dadurch gekennzeichnet, dass** als Plasma ein Sauerstoffplasma verwendet wird.

3. Verfahren nach Anspruch 1 oder 2, **dadurch gekennzeichnet, dass** die Plasmabehandlung bei einer Temperatur durchgeführt wird, ausgewählt aus einem Bereich mit einer unteren Grenze von 40 °C und einer oberen Grenze von 100 °C.

4. Verfahren nach einem der vorhergehenden Ansprüche, **dadurch gekennzeichnet, dass** die Plasmabehandlung bei einem Druck durchgeführt wird, der ausgewählt ist aus einem Bereich mit einer unteren Grenze von 0,01 mbar und einer oberen Grenze von 200 mbar.

5. Verfahren nach einem der vorhergehenden Ansprüche, **dadurch gekennzeichnet, dass** die Oberflächenspannung der metallischen Oberfläche des Verzahnungselementes (1, 2) um zumindest 30 % im Vergleich zur Oberflächenspannung vor der Behandlung erhöht wird, bzw. dass ein Verzahnungselement verwendet wird, dessen Oberflächenspannung zumindest 40 mN/m im zu beschichtenden Bereich beträgt.

6. Verfahren nach einem der vorhergehenden Ansprüche, **dadurch gekennzeichnet, dass** die Plasmabehandlung bei einer Wechselspannung mit einer Frequenz durchgeführt wird, ausgewählt aus einem Bereich mit einer unteren Grenze von 10 kHz und einer oberen Grenze von 3 GHz.

7. Verfahren nach einem der vorhergehenden Ansprüche, **dadurch gekennzeichnet, dass** die zu beschichtende Oberfläche vor der Behandlung mit dem Plasma einer zumindest einmaligen Reinigung mit zumindest einem öllösenden Reinigungsmittel unterzogen wird.

8. Verfahren nach Anspruch 7, **dadurch gekennzeichnet, dass** die Reinigung teilweise unter Vakuum durchgeführt wird.

9. Verfahren nach Anspruch 7 oder 8, **dadurch gekennzeichnet, dass** als Reinigungsmittel Perchlorethylen verwendet wird.

10. Verfahren nach einem der vorhergehenden Ansprüche, **dadurch gekennzeichnet**, das die Beschichtung auf einem nach einem Sinterverfahren hergestellten Verzahnungselement (1, 2) aufgetragen wird.

11. Metallisches Verzahnungselement (1) mit einem Grundkörper, der entlang seines Umfanges Zähne (7) aufweist, die zumindest teilweise an einer Oberfläche eine abreibbare Polymerbeschichtung (5) aufweisen, **dadurch gekennzeichnet, dass** die Polymerbeschichtung (5) direkt auf der metallischen Oberfläche aufgetragen ist.

12. Verzahnungselement (1) nach Anspruch 11, **dadurch gekennzeichnet, dass** der Grundkörper ein Sinterbauteil ist.

13. Verzahnungselement nach Anspruch 12, **dadurch gekennzeichnet. dass** der Grundkörper zumindest in oberflächennahen Bereichen eine Porosität aufweist, die ausgewählt ist aus einem Bereich mit einer unteren Grenze von 0,1 % und einer oberen Grenze von 20 %.

14. Antrieb (3) mit zumindest zwei kämmenden Verzahnungselementen (1,2), **dadurch gekennzeichnet, dass** zumindest ein Verzahnungselement (1,2) entsprechend einem der Ansprüche 11 bis 13 ausgebildet ist.

## Claims

1. Method of producing an abradable polymer coating (5), optionally containing at least one solid lubricant, on a surface of teeth (7, 8) of a metal toothed element (1, 2) for setting a tooth flank clearance (4) between the teeth (7, 8) of two meshing toothed elements (1,2), whereby the abradable polymer coating (5) is applied to at least part of a surface of the teeth (7) of at least one toothed element (1, 2), **characterized in that** the surface to be coated is treated in a plasma prior to applying the polymer coating (5) and the polymer coating (5) is applied directly to this surface.

2. Method according to claim 1, **characterized in that** the plasma used is an oxygen plasma.

3. Method according to claim 1 or 2, **characterized in that** the plasma treatment is conducted at a temperature selected from a range with a lower limit of 40 °C and an upper limit of 100 °C.

4. Method according to one of the preceding claims, **characterized in that** the plasma treatment is conducted at a pressure selected from a range with a lower limit of 0,01 mbar and an upper limit of 200 mbar.

5. Method according to one of the preceding claims, **characterized in that** the surface tension of the metal surface of the toothed element (1, 2) is increased by at least 30 % compared with the surface tension prior to the treatment or a toothed element is used, the surface tension of which is at least 40 mN/m in the region to be coated.

6. Method according to one of the preceding claims, **characterized in that** the plasma treatment is conducted at an alternating voltage with a frequency selected from a range with a lower limit of 10 kHz and an upper limit of 3 GHz.

7. Method according to one of the preceding claims, **characterized in that** the surface to be coated is subjected to at least a one-off cleaning process with an oil-dissolving cleaning agent prior to being treated with plasma.

8. Method according to claim 7, **characterized in that** the cleaning process is conducted partially under vacuum.

9. Method according to claim 7 or 8, **characterized in that** perchloroethylene is used as the cleaning agent.

10. Method according to one of the preceding claims, **characterized in that** the coating is applied to a toothed element (1, 2) produced by a sintering method.

11. Metal toothed element (1) with a main body with teeth (7) along its circumference, which has an abradable polymer coating (5) on at least a part of a surface, **characterized in that** the polymer coating (5) is applied directly to the metal surface.

12. Toothed element (1) according to claim 11, **characterized in that** the main body is a sintered component.

13. Toothed element according to claim 12, **characterized in that** the main body has a porosity, at least in regions close to the surface, selected from a range with a lower limit of 0,1% and an upper limit of 20 %.

14. Drive (3) with at least two meshing toothed elements (1, 2), **characterized in that** at least one toothed element (1, 2) is embodied according to one of claims 11 to 13.

## Revendications

1. Procédé pour la fabrication d'un revêtement polymère (5), pouvant être abrasé et contenant, le cas échéant, au moins un lubrifiant solide, sur une surface des dents (7, 8) d'un élément à denture (1, 2) métallique pour le réglage d'un jeu (4) des flancs de dent entre les dents (7, 8) de deux éléments à denture (1, 2) engrenant l'un dans l'autre, selon lequel sur au moins une partie d'une surface des dents (7) d'au moins un élément à denture (1, 2) est déposé le revêtement polymère (5) pouvant être abrasé, **caractérisé en ce que** la surface à revêtir est traitée dans un plasma avant le dépôt du revêtement polymère (5) et ensuite le revêtement polymère (5) est déposé directement sur cette surface.

2. Procédé selon la revendication 1, **caractérisé en ce que** le plasma utilisé est un plasma oxygène.

3. Procédé selon la revendication 1 ou 2, **caractérisé en ce que** le traitement plasma est effectué à une température choisie dans une plage avec une limite inférieure de 40°C et une limite supérieure de 100°C.

4. Procédé selon l'une quelconque des revendications précédentes, **caractérisé en ce que** le traitement plasma est effectué avec une pression choisie dans une plage avec une limite inférieure de 0,01 mbar et une limite supérieure de 200 mbar.

5. Procédé selon l'une quelconque des revendications précédentes, **caractérisé en ce que** la tension superficielle de la surface métallique de l'élément à denture (1, 2) a été augmentée d'au moins 30 % par rapport à la tension superficielle avant le traitement, ou en ce qu'on utilise un élément à denture dont la tension superficielle est au moins de 40 mN/m dans la zone à revêtir.

6. Procédé selon l'une quelconque des revendications précédentes, **caractérisé en ce que** le traitement plasma est effectué à une tension alternative avec une fréquence choisie dans une plage avec une limite inférieure de 10 kHz et une limite supérieure de 3GHz.

7. Procédé selon l'une quelconque des revendications précédentes, **caractérisé en ce que** la surface à revêtir est soumise, avant le traitement avec le plasma, à au moins un seul nettoyage avec au moins un produit de nettoyage dissolvant l'huile.

8. Procédé selon la revendication 7, **caractérisé en ce que** le nettoyage est effectué en partie sous vide.

9. Procédé selon la revendication 7 ou 8, **caractérisé en ce que** le produit de nettoyage utilisé est du perchloréthylène.

10. Procédé selon l'une quelconque des revendications précédentes, **caractérisé en ce que** le revêtement est déposé sur un élément à denture (1, 2) réalisé selon un procédé de frittage.

11. Élément à denture (1) métallique comportant un corps de base, qui est muni de dents (7) le long de sa périphérie, lesquelles comportent au moins partiellement sur une surface un revêtement polymère (5) pouvant être abrasé, **caractérisé en ce que** le revêtement polymère (5) est déposé directement sur la surface métallique.

12. Élément à denture (1) selon la revendication 11, **caractérisé en ce que** le corps de base est une pièce frittée.

13. Élément à denture (1) selon la revendication 12, **caractérisé en ce que** le corps de base, au moins dans des zones proches de la surface, possède une porosité choisie dans une plage avec une limite inférieure de 0,1 % et une limite supérieure de 20 %.

14. Système d'entraînement (3) avec au moins deux éléments à denture (1, 2) engrenant l'un dans l'autre, **caractérisé en ce qu'**au moins un élément à denture (1, 2) est réalisé conformément à l'une des revendications 11 à 13.
